# EUROPEAN PATENT APPLICATION

(11) **EP 2 017 007 A2**
(43) Date of publication of application: **21.01.2009**
(21) Application number: 08012259.1
(22) Date of filing: 07.07.2008
(51) Int. Cl.: B01L 3/02, G01N 35/10

(54) **Chemical analysis device**

(30) Priority: 10.07.2007 JP 2007181314
(71) Applicant: Hitachi High-Technologies Corporation, Tokyo 105-8717 (JP)
(72) Inventor: Seino, Taisaku, c/o Hitachi High-Technologies Corporation, Hitachinaka-shi, Ibaraki 312-8504 (JP); Umetsu, Hiroshi, c/o Hitachi High-Tech Manufacturing & Service Corporation, Hitachinaka-shi, Ibaraki 312-8504 (JP); Saito, Michihiro, c/o Hitachi High-Technologies Corporation, Hitachinaka-shi, Ibaraki 312-8504 (JP); Kanda, Takayuki, c/o Hitachi High-Technologies Corporation, Hitachinaka-shi, Ibaraki 312-8504 (JP); Hattori, Kumiko, c/o Hitachi High-Technologies Corporation, Hitachinaka-shi, Ibaraki 312-8504 (JP)
(74) Representative: Strehl Schübel-Hopf & Partner

(57) **Abstract**

A chemical analysis device capable of suppressing deterioration of analysis and test accuracy while avoiding contamination by residual samples or reagents and having no complicated configuration is constructed.

A pipetting unit is equipped with a syringe, plunger, and needle unit in which a carrier for capturing nucleic acid and a detection cell is mounted on the needle unit. A pipetting unit drive system is configured so that the pipetting unit is detachable. After the detection cell is removed from the pipetting unit and fixed to a nucleic acid amplification detection unit, a suction/dispensing operation of samples/reagents is performed by the pipetting unit and components to be measured are captured by the carrier. Captured components are measured after being dispensed into the detection cell fixed to the nucleic acid amplification detection unit. Then, the detection cell is taken out from the nucleic acid amplification detection unit while mounted on the pipetting unit and the whole pipetting unit is removed from the pipetting unit drive system.

## Description

### BACKGROUND OF THE INVENTION

### 1. Field of the Invention

The present invention relates to a chemical analysis device equipped with a pipetting function of a liquid sample or a reagent to analyze chemical substances in the sample solution.

### 2. Description of the Related Art

In a system in which different liquid samples or reagents are pipetted to perform an analysis or a test, a channel or a liquid storage unit used for pipetting is frequently used in common for different samples or reagents, which causes a problem that the channel or liquid storage unit mutually becomes a source of contamination due to residual samples or reagents.

Thus, replacement of a tip part of a pipetting means is assumed in the conventional technology. However, among portions used repeatedly, there has a portion that comes into contact with liquids and there is a problem that it is difficult to avoid contamination of the portion by residual samples or reagents.

To prevent contamination, as described in Japanese Patent Application Laid-Open Publication No. 2000-121650, a pipetting channel of liquid or a portion containing a reagent cell is washed.

Moreover, in a genetic test accompanied by nucleic acid amplification, as described in Japanese Unexamined Patent Application Publication (Translation of PCT Application) No. 9-504690, a cell in which an amplification reaction occurs is sealed because nucleic acid may be leaked in an amplification process to become a source of contamination.

However, according to a technology described in Japanese Patent Application Laid-Open Publication No. 2000-121650, there is a problem that a means for washing a portion including a reagent cell is needed, complicating the configuration of an analysis device.

A technology described in Japanese Unexamined Patent Application Publication (Translation of PCT Application) No. 9-504690 also needs a means for sealing a cell in which an amplification reaction occurs and thus, there is also a problem that the configuration of an analysis device becomes complicated. In addition, stirring of a solution needed in the course of a reaction and also pipetting and dropping could also lead to contamination when analyzed repeatedly.

An object of the present invention is to construct a chemical analysis device for performing a chemical analysis or genetic test that can suppress deterioration of analysis accuracy and test accuracy while avoiding contamination by residual samples or reagents remaining in the device and having no complicated configuration.

### SUMMARY OF THE INVENTION

To solve the above problems, the present invention is constituted as described below.

A chemical analysis device includes a pipetting means for sucking in and dispensing a liquid sample or a liquid reagent and a pipetting means movement drive means having a support unit for detachably supporting the pipetting means, a drive unit for driving the pipetting means to cause a suction or dispensing operation of the liquid sample or liquid reagent, and a movement unit for moving the pipetting means.

A pipetting unit which is used in a chemical analysis device or a genetic testing device for analyzing a liquid sample and which sucks in and dispenses the liquid sample or a liquid reagent, includes a needle unit having a nucleic acid capturing carrier therein for a genetic test and being used for sucking in and dispensing the liquid sample or liquid reagent, a plunger unit for sucking in and dispensing the liquid sample or liquid reagent via the needle unit, a syringe unit for movably supporting the plunger unit, a flange unit detachably supported by the chemical analysis device or genetic testing device, a drive end detachably supported by the chemical analysis device or genetic testing device so that the plunger unit is driven by a drive means of the chemical analysis device or genetic testing device, and a detection cell detachably supported by the needle unit, which cell serves as a protective cover of the needle unit and houses an object to be analyzed.

A genetic testing device having a testing unit for testing a gene in a liquid sample, includes a pipetting means having a nucleic acid capturing carrier therein and being used for sucking in and dispensing the liquid sample or a liquid reagent, and a pipetting means movement drive means having a support unit for detachably supporting the pipetting means, a drive unit for driving the pipetting means to cause a suction or dispensing operation of the liquid sample or liquid reagent, and a movement unit for moving the pipetting means.

A chemical analysis device for performing a chemical analysis or genetic test that can suppress deterioration of analysis accuracy and test accuracy while avoiding contamination by residual samples or reagents remaining in the device and having no complicated configuration can be constructed.

### BRIEF DESCRIPTION OF THE DRAWINGS

FIG. 1 is a diagram for illustrating the configuration of a genetic testing device in a first embodiment of the present invention;
FIGS. 2A and 2B are diagrams for illustrating mounting of a pipetting unit to a pipetting drive system or removal of the pipetting unit from the pipetting drive system in the first embodiment of the present invention;
FIGS. 3A and 3B are diagrams for illustrating a drive mechanism of a plunger of the pipetting unit in the first embodiment of the present invention;
FIGS. 4A and 4B are diagrams for illustrating a vertical movement mechanism of the pipetting unit in the first embodiment of the present invention;
FIG. 5 is a flow chart of a testing process in a tubercle bacillus test;
FIG. 6 is a diagram for illustrating a device state when a nucleic acid amplification detection unit of a detection cell in the first embodiment is mounted;
FIG. 7 is a diagram for illustrating the device state when a reagent being pipetted in the first embodiment;
FIG. 8 is a diagram for illustrating the device state in a nucleic acid amplification detection process in the first embodiment;
FIG. 9 is a diagram for illustrating principal units of a second embodiment;
FIGS. 10A and 10B are diagrams for illustrating principal units of the second embodiment;
FIG. 11 is a diagram for illustrating principal units of a third embodiment; and
FIG. 12 is a diagram for illustrating principal units of the third embodiment. Description of Reference Numerals

- 1: Reagent cell
- 1a: Protective film
- 1b: Nucleic acid binding reagent cell
- 1c to 1f: Cleaning reagent cell
- 1g: Reagent waste cell
- 1h: Nucleic acid elution reagent cell
- 2: Pipetting unit
- 2a: Syringe
- 2b: Plunger
- 2c: Needle unit
- 2d: Carrier
- 2e: Drive end of the plunger
- 2f: Flange unit
- 3: Pipetting unit drive system
- 3a: Pipetting unit vertical drive unit
- 3b: Plunger drive unit
- 3c: Pipetting unit horizontal drive unit
- 3d: Syringe fixing lock pin
- 3e: Syringe fixing holder
- 3f: Plunger drive ball screw
- 3h: Plunger holder
- 3i: Pipetting unit vertical movement ball screw
- 3k: Syringe holder
- 3m: Syringe support unit
- 4: Sample cell
- 5: Sample cell holding unit
- 5a: Peltier device
- 5b: Radiation fin
- 6: Detection cell
- 7: Reagent cell holding unit
- 8: Nucleic acid amplification detection unit
- 8a: Heater
- 8b: Photo detection window
- 9: Sample cell rotating unit
- 9a: Transmission unit
- 9b: Drive motor
- 9c: Belt mechanism
- 10: Nucleic acid purification tip
- 11: Solution pipetting tip

### DESCRIPTION OF THE PREFERRED EMBODIMENTS

Embodiments of the present invention will be described below with reference to attached drawings. Embodiments below are examples where the present invention is applied to genetic testing devices among chemical analysis devices.

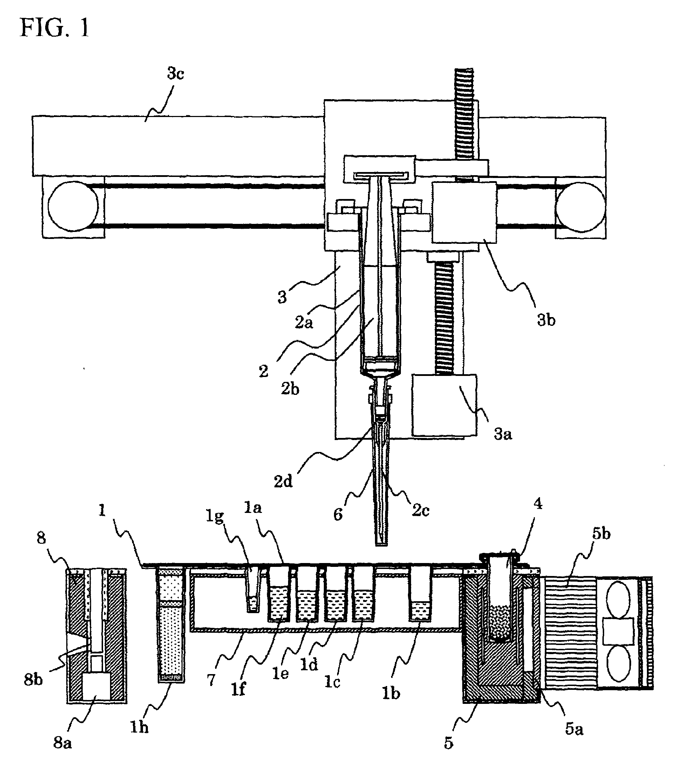

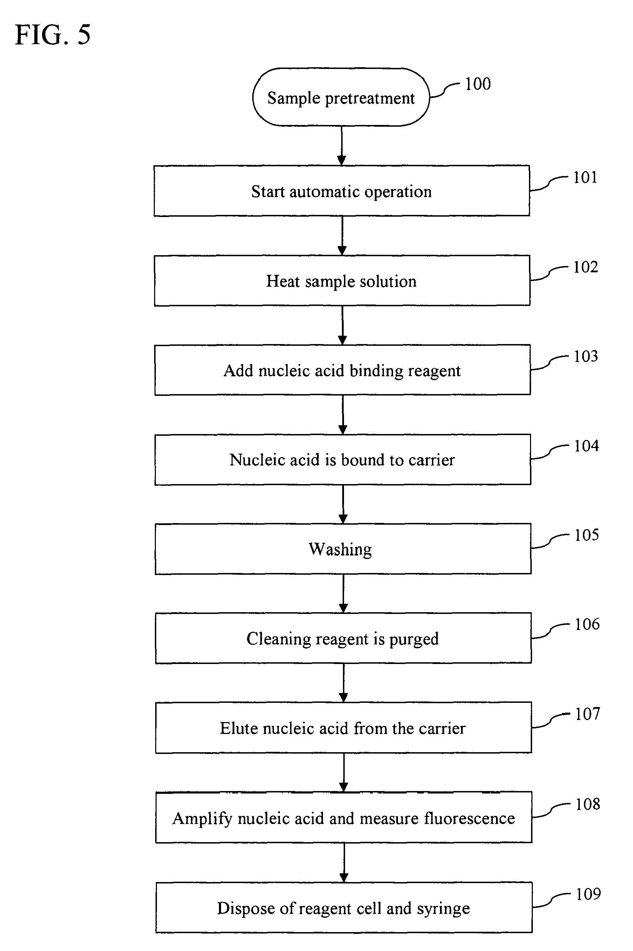

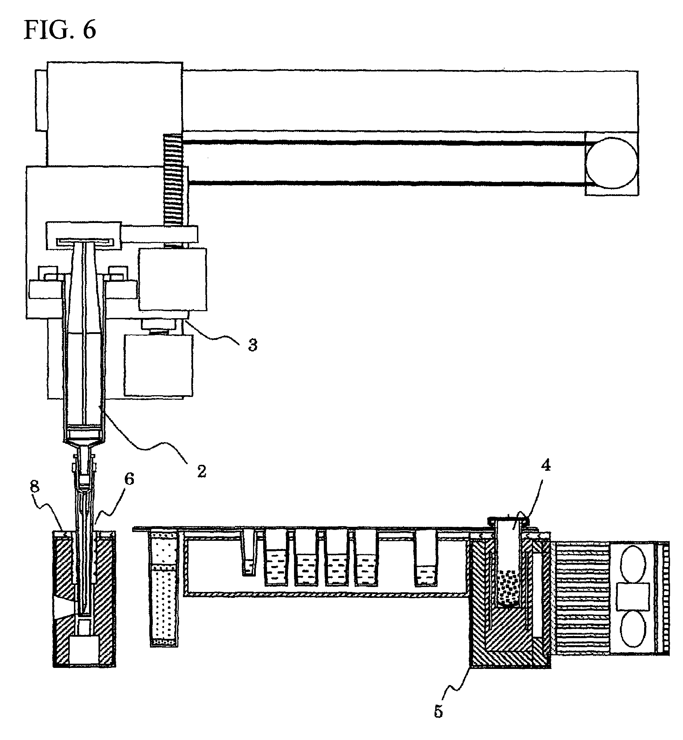

FIG. 1 to FIG.4 are diagrams for illustrating the configuration of a genetic testing device in a first embodiment of the present invention and FIG. 5 is a flow chart of a testing process in a tubercle bacillus test. FIG. 6 to FIG. 8 are diagrams illustrating a device state in each testing process.

In FIG. 1, a reagent cell 1 is filled with each reagent to be used for analysis and the reagent cell 1 is covered with a protective film 1a obtained by surface-coating a base material of PET (Polyethylene Terephthalate) with aluminum to prevent evaporation. A pipetting unit 2 is provided with a syringe 2a made of resin, a plunger 2b, and a needle unit 2c. The needle unit 2c contains a carrier 2d for capturing nucleic acid at a base thereof, and one pipetting unit 2 performs a triple role of piercing of the protective film 1a by the needle unit 2c, reagent pipetting, and nucleic acid purification.

Amounts of suction and dispensing of a solution such as a reagent and a sample by the pipetting unit 2 and working speeds thereof are controlled by the push-pull distance and speed of the plunger 2b relative to the syringe 2a. Insertion of the needle unit 2c of the pipetting unit 2 into each reagent cell or the like and withdrawal of the needle unit 2c therefrom are controlled by a pipetting unit vertical drive unit 3a including a pulse motor and a ball screw. Push-pull of the plunger 2b, that is, suction and dispensing of a solution is controlled by a plunger drive unit 3b.

On the other hand, movement of the pipetting unit 2 in a horizontal direction, that is, movement between cells, is controlled by a pipetting unit horizontal drive unit 3c driven by the pulse motor and belt. The carrier 2d is formed from glass fibers, glass particles, silica particles, silica wool, or materials of crushed particles thereof containing silicon oxide.

A sample to be tested such as blood is pipetted into a sample cell 4 and, after pretreatment, the sample cell 4 is fitted to a sample cell holding unit 5. Similarly, a detection cell 6 doubling as a protective cover is fitted to the needle unit 2c of the pipetting unit 2, the pipetting unit 2 is fitted to a pipetting unit drive system 3 with the detection cell 6 being fitted to the needle unit 2c, and the reagent cell 1 is fitted to a reagent cell holding unit 7.

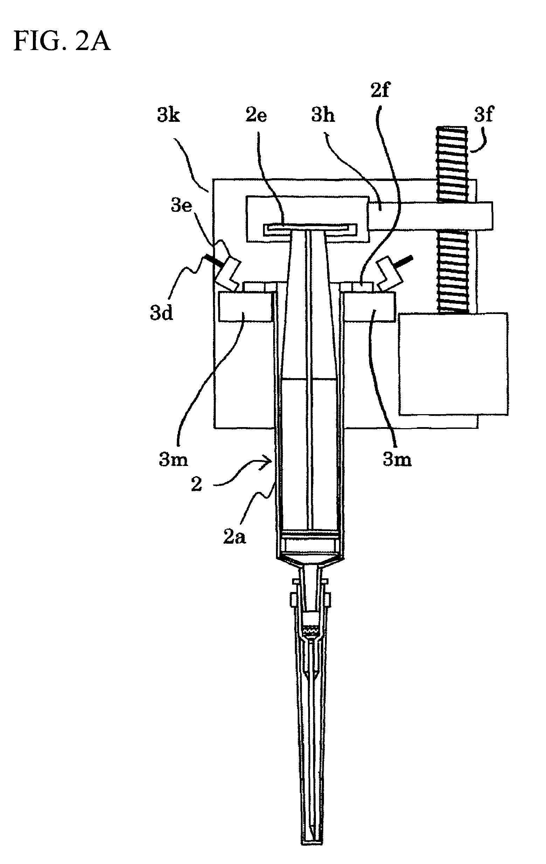

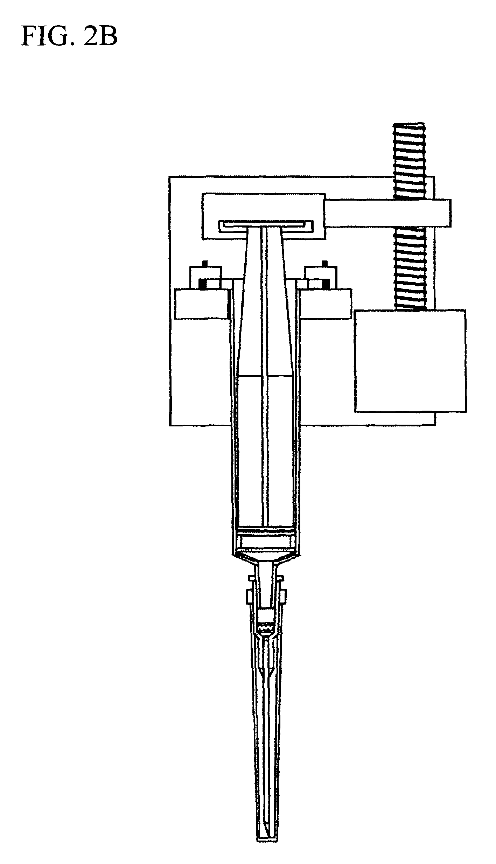

The pipetting unit 2 is configured to be easily mountable to and removable from the pipetting unit drive system 3 by an operator. FIGS. 2A and 2B are diagrams for illustrating mounting of the pipetting unit 2 to the pipetting unit drive system 3 and removal of the pipetting unit 2 therefrom. As shown in FIG. 2A, the plunger 2b of the pipetting unit 2 is inserted into a syringe support unit 3m of a syringe holder 3k and also a drive end 2e of the plunger 2b is inserted into a plunger holder (plunger support unit) 3h supported by a plunger drive ball screw 3f.

Then, to fix a flange unit 2f, a syringe fixing holder 3e is set to a syringe fixing position, a syringe fixing lock pin 3d is pushed in, and the syringe fixing holder 3e is locked to produce a state shown in FIG. 2 B.

When the pipetting unit 2 is to be removed from the syringe holder 3k, the syringe fixing lock pin 3d is lifted to release the syringe fixing holder 3e. Then, the pipetting unit 2 is removed from the syringe holder 3k.

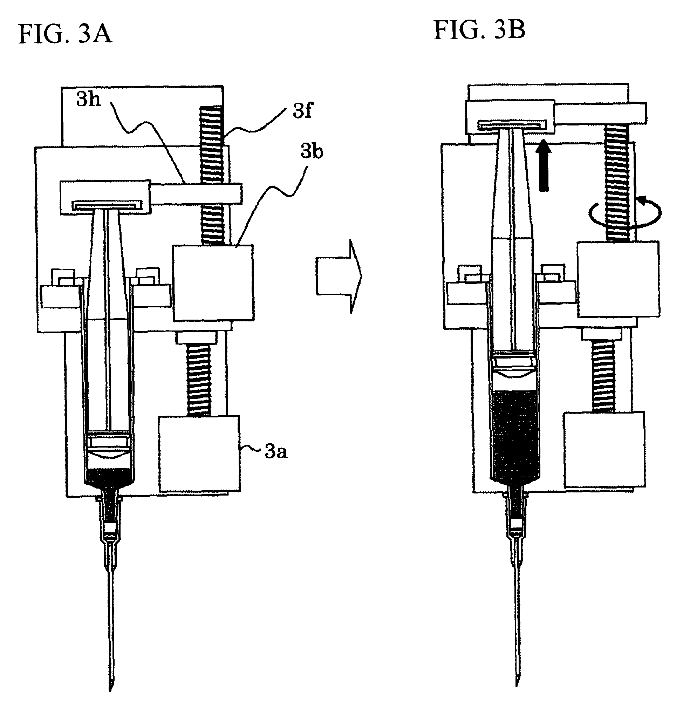

The plunger 2b of the pipetting unit 2 is configured to be push-pull driven by the pipetting unit drive system 3. FIGS. 3A and 3B are diagrams for illustrating a drive mechanism of the plunger 2b. As shown in FIG. 3 A, a plunger drive ball screw 3f is connected to the plunger drive motor (pipetting unit vertical drive unit) 3a to be rotated. Then, the plunger 2b is push-pull-driven by the plunger drive ball screw 3f being rotated by the plunger drive motor 3 a (in FIG. 3 B). Whether to push or pull the plunger 2b is switched by switching the direction of rotation of the plunger drive motor (plunger drive unit) 3b and the push-pull speed of the plunger 2b is switched by switching the rotation speed of the plunger drive motor 3b.

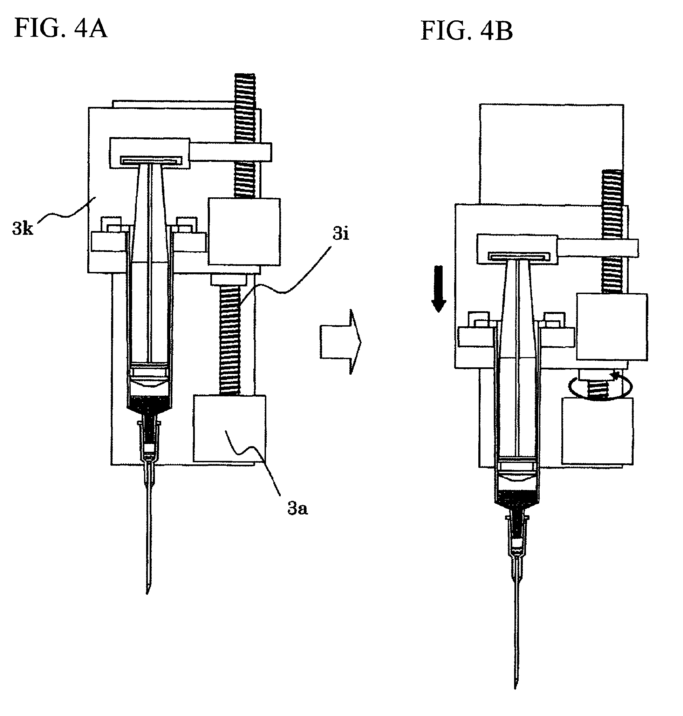

The whole pipetting unit 2 is configured to be moved vertically by the pipetting unit drive system 3. FIGS. 4A and 4B are diagrams for illustrating a vertical movement mechanism of the pipetting unit 2. As shown in FIG. 4A, the syringe holder 3k is supported by a pipetting unit vertical movement ball screw 3i and the pipetting unit vertical movement ball screw 3i is connected to a pipetting unit vertical movement motor 3j to be rotated. Then, the pipetting unit 2 is moved vertically by the pipetting unit vertical movement ball screw 3i being rotated by the pipetting unit vertical movement motor 3j (FIG. 4 B). The direction of vertical movement of the pipetting unit 2 is switched by switching the direction of rotation of the pipetting unit vertical movement motor 3j and the speed of vertical movement is switched by switching the rotation speed of the pipetting unit vertical movement motor 3j.

Sample pretreatment is performed (step 100 in FIG. 5) and after starting an automatic operation of a genetic testing device (step 101), first the sample is heated for a predetermined time to dissolve cell walls of tubercle bacillus and then cooled to bring the sample back to the room temperature (step 102). The sample cell holding unit 5 is provided with a Peltier device 5a and a radiation fin 5b to perform the above temperature control.

While the sample solution is heated, as shown in FIG. 6, the pipetting unit 2 moves to a nucleic acid amplification detection unit 8 and the detection cell 6 is inserted into the nucleic acid amplification detection unit 8 and then, the detection cell 6 is separated from the pipetting unit 2 to be fixed to the nucleic acid amplification detection unit 8. Though not shown, a means for removing the detection cell 6 from the needle unit 2c of the pipetting unit 2 and fixing the detection cell 6 to the nucleic acid amplification detection unit 8 is formed. As described later, the detection cell 6 fixed to the nucleic acid amplification detection unit 8 is provided with a mechanism used for being removed from the nucleic acid amplification detection unit 8 with the detection cell 6 mounted on the needle unit 2c when the needle unit 2c is pulled up after the needle unit 2c of the pipetting unit 2 has been inserted into the detection cell 6 and a predetermined treatment has been carried out.

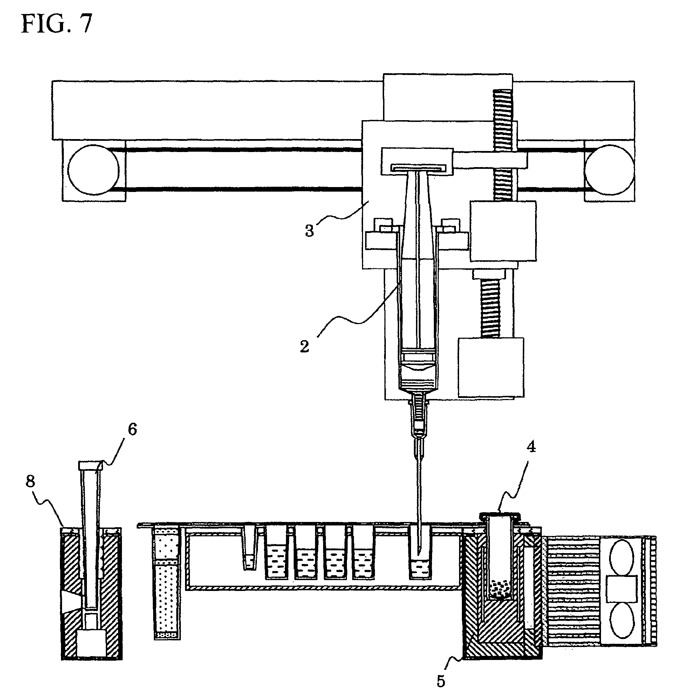

Next, the pipetting unit 2 is moved and, as shown in FIG. 7, a nucleic acid binding reagent is sucked from a nucleic acid binding reagent cell 1b into the syringe 2a of the pipetting unit 2 before being dispensed to the sample cell 4. Then, suction and dispensing of a mixed solution of the sample solution and nucleic acid binding reagent to the sample cell 4 are repeated a plurality of times. The reagent and sample solution are mixed and nucleic acid is bound to the carrier 2d by the suction and dispensing (steps 103 and 104).

In addition to nucleic acid, impurities contained in the sample adhere to the carrier 2d in the needle unit 2c, and impurities are removed by a cleaning reagent having ethanol as a main ingredient in the washing process to be performed next.

The first embodiment of the present invention has an integral structure in which cleaning reagent cells 1c to 1f at four locations are provided in the reagent cell 1. Impurities adhering to the carrier are washed away by replacing the cleaning reagent by sucking cleaning reagents from these cleaning reagent cells 1c to 1f into the syringe 2a and then dispensing the cleaning reagents to the cell (step 105).

Since the cleaning reagents could be a factor to inhibit a reaction in the subsequent nucleic acid amplification process, residual cleaning reagents inside the syringe 2a and on the carrier 2d are purged (step 106). To purge cleaning reagents, the needle unit 2c is inserted into a reagent waste cell 1g and an adsorbent contained in the reagent waste cell 1g is caused to absorb cleaning reagents inside the pipetting unit 2 by sucking air into the syringe 2a and dispensing it. A mist that is generated at this point and contains cleaning reagents is prevented from being leaked out of the cell by a filter provided to the reagent waste cell 1 g.

Then, a nucleic acid elution reagent is sucked from a nucleic acid elution reagent cell 1h into the syringe 2a to elute nucleic acid captured by the carrier 2d (step 107). The nucleic acid elution reagent sucked into the syringe 2a contains a nucleic acid amplification enzyme and a specific nucleic acid can be caused to amplify by controlling the nucleic acid elution reagent containing eluted nucleic acid at optimum temperature.

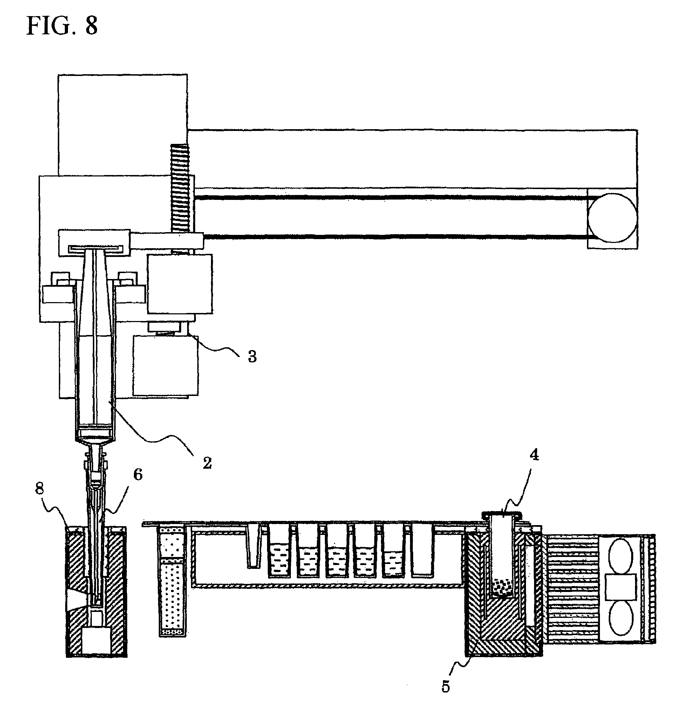

To perform this amplification reaction of nucleic acid and a detection process, as shown in FIG. 8, the needle unit 2c of the pipetting unit 2 is moved to the nucleic acid amplification detection unit 8 and inserted into the detection cell 6 to dispense a solution in the syringe 2a thereto. In this case, scattering of the solution can be prevented by performing suction and dispensing through pores of a film.

The nucleic acid eluting solution in the detection cell 6 is put in an environment of a constant temperature by a heater 8a contained in the nucleic acid amplification detection unit 8 to allow an amplification reaction at a constant temperature to proceed. The first embodiment of the present invention assumes nucleic acid amplification at a constant temperature by the Nucleic Acid Sequence-Based Amplification (NASBA) method or the like, but nucleic acid amplification by the PCR method can also be performed by adopting cycle control of high temperature-low temperature as the temperature control in a nucleic acid detection amplification unit. Nucleic acid is fluorescence-tagged and, through a photo detection window 8b provided in the nucleic acid amplification detection unit, an excitation light is made incident on a nucleic acid solution in the cell and resulting fluorescence from there is detected to measure fluorescence in the solution (step 108).

If tubercle bacilli in concentration higher than the lower limit of detection are present in the sample solution, the presence thereof is detected as an increase in the amount of light of fluorescence and judged to be positive. If, on the other hand, tubercle bacilli in concentration lower than the lower limit of detection are present, the presence thereof is confirmed to be negative because the amount of light of fluorescence does not increase within a predetermined measuring time. The detection process terminates after the presence thereof is judged to be positive or negative, and the pipetting unit 2 having the sample cell 4 and the detection cell 6 fitted thereto, and the reagent cell 1 are removed from the device before being disposed of (step 109).

Thus, units brought into contact with a reagent or a sample solution are disposed of after each test so that mutual contamination by reagents or samples between tests can be prevented. Particularly the detection cell 6 is disposed of while being capped by the pipetting unit 2, and thus, amplified nucleic acid does not remain in the device and contamination by leakage of amplified nucleic acid can be prevented.

Therefore, according to the first embodiment of the present invention, a genetic testing device capable of suppressing deterioration of analysis accuracy and test accuracy while avoiding contamination by residual samples or reagents remaining in the device and having no complicated configuration, can be constructed.

If a plurality of pipetting unit holding units is provided in the pipetting unit drive system 3 and accordingly holding units for reagent cells or sample cell are equipped, that is, a plurality of units of the pipetting unit drive system 3 shown in FIG. 1 is formed in parallel, a plurality of testing processes can be performed simultaneously so that throughput of the testing processes can be improved without adding new analysis devices.

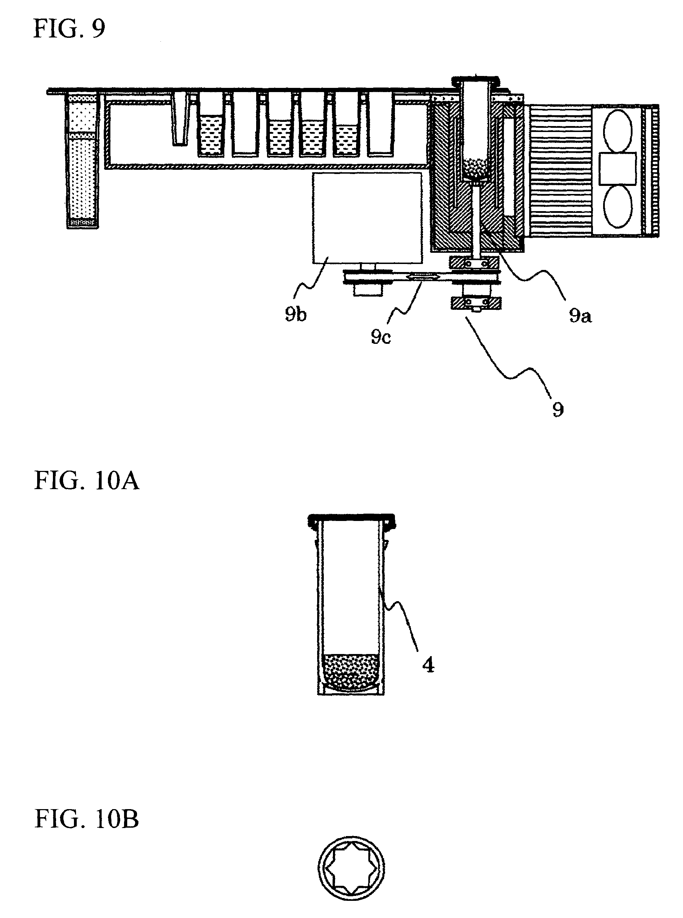

FIG. 9 is a diagram for illustrating principal units of the second embodiment and a diagram showing a portion corresponding to the sample cell holding unit 5 in the first embodiment. Other components are the same as those in the first embodiment and are omitted.

In the second embodiment, as is clear from FIG. 9, a sample cell rotating unit 9 for mixing a sample solution and a nucleic acid binding reagent is provided. The sample cell is connected to a transmission unit 9a when fitted to the genetic testing device. A drive motor 9b rotates the transmission unit 9a via a belt mechanism 9c, thereby rotating the sample cell itself.

FIGS. 10A and 10B are diagrams showing a side cross section (FIG. 10 A) of the sample cell and an axial transverse section (in FIG. 10B) thereof. Like the axial transverse section shown in FIG. 10 B, convex portions are provided on an inner wall of the cell, thereby allowing stirring of a solution when the sample cell rotates.

According to the second embodiment of the present invention, in addition to being able to achieve an effect similar to that of the first embodiment, the treatment time can be reduced compared with mixing and stirring by suction and dispensing using the pipetting unit 2, by mixing and stirring being performed by the sample cell rotating unit 9.

In the case of a mechanical mixing method by a stirring spatula or the like, the treatment time can be reduced more than that of mixing and stirring through suction/dispensing, there is a possibility of contamination because a stirring means and a solution are brought into contact.

In contrast, the possibility of contamination can be reduced, like the second embodiment of the present invention, by rotating the sample cell for mixing and stirring.

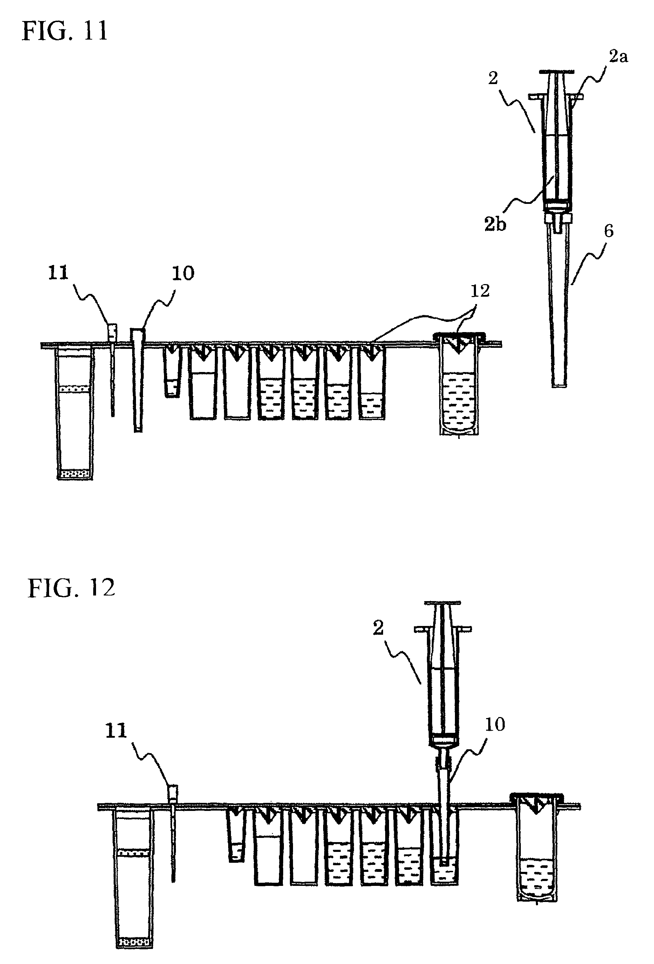

FIG. 11 and FIG. 12 are diagrams for illustrating principal units of the third embodiment. The third embodiment is an example in which no needle is used in the pipetting unit 2. Components other than those shown in FIG. 11 and FIG. 12 are the same as those in the first embodiment and are omitted.

In the third embodiment, the pipetting unit 2 uses two types of tips, a nucleic acid purification tip 10 and a solution pipetting tip 11, by attaching and detaching these tips. The pipetting unit 2 is initially configured by the syringe 2a and the plunger 2b, and the nucleic acid purification tip 10 and the solution pipetting tip 11 are each fitted to the reagent cell 1.

The nucleic acid purification tip 10 contains a carrier for capturing nucleic acid and the reagent cell 1 is covered with a protective film like in the first embodiment and further, a septum 12 is fitted inside the cell. The septum 12 is made from a material such as chloroprene rubber that has resistance to reagents encapsulated in a cell and is rich in elasticity. The protective film is manually removed from the reagent cell 1 by an operator immediately before the reagent cell being fitted to the genetic testing device or immediately thereafter and before an automatic operation being started.

The pipetting unit 2 moves to the nucleic acid amplification detection unit 8 (not shown in FIG. 11 and FIG. 12) to fix the detection cell 6 to the nucleic acid amplification detection unit 8. Then, the solution pipetting tip 11 is mounted on the pipetting unit 2 to pipette a solution. At the time of operation of nucleic acid purification, the solution pipetting tip 11 is removed from the pipetting unit 2 and fitted to the reagent cell 1 and then the nucleic acid purification tip 10 is mounted on the pipetting unit 2 to perform an operation of nucleic acid purification.

Then, the pipetting unit 2 with the nucleic acid purification tip 10 mounted thereon moves to the nucleic acid amplification detection unit 8 before being inserted into the detection cell 6. Subsequent operations are the same as those in the first embodiment.

In the third embodiment, suction and dispensing of a solution is performed by the nucleic acid purification tip 10 or the solution pipetting tip 11 being inserted into the cell through the septum 12. When either of tips 10 and 11 is not inserted, the mouth of the septum 12 is closed so that leakage and scattering of a reagent or a sample solution therein can be prevented.

The nucleic acid purification tip 10 is fitted to the pipetting unit 2 and used for the nucleic acid binding and washing processes and also for the nucleic acid elution process. The solution pipetting tip 11, on the other hand, is used for addition of a nucleic acid binding reagent to a sample solution and also for mixing of a sample solution and a nucleic acid binding reagent by repeated suction and dispensing.

The first embodiment exemplifies a case in which a nucleic acid amplification enzyme and a nucleic acid elution reagent are mixed in advance. However, in order to improve keeping quality, if both should have been separated with the nucleic acid amplification enzyme separated in a dry state to be mixed after starting the testing process, the nucleic acid elution reagent is required to be pipetted with high accuracy of about ±5 µL in a working range of 20 µL to 100 µL.

By using the solution pipetting tip 11 made to match high-accuracy pipetting, the third embodiment achieves an effect of being able to improve pipetting accuracy compared with a case in which the tip is made to match both of nucleic acid purification and solution pipetting.

According to the present invention, as described above, contamination caused by residual samples or reagents remaining in a device can be prevented by making portions that come into contact with such samples or reagents in the device during analysis or testing disposable.

To perform a pipetting operation to a reagent cell covered with a protective film, scattering of a solution can be prevented by piercing the protective film with a needle fitted to the pipetting unit and sucking or dispensing the solution through resultant pore of the film. Contamination inside or outside the device by leakage of amplified nucleic acid can be prevented by using a protective cover at a tip of the pipetting unit as a detection cell for a nucleic acid amplification reaction and making amplified nucleic acid and pipetting means disposable as a package.

Operations such as pipetting and nucleic acid purification can be performed with a single device by incorporating a carrier for nucleic acid purification into the pipetting unit and also solution scattering accompanying tip replacement can be prevented.

Further, contamination by mist scattering of a solution can be prevented by providing a reagent waste cell equipped with a filter and an adsorbent inside a reagent cell for a purge process of a cleaning liquid needed for processes.

Further, both effects of reduced treatment time for mixing and contamination prevention can be achieved by providing a transmission unit for mixing a reagent and a sample.

The above examples are examples where the present invention is applied to a genetic testing device, but the present invention is not limited to the genetic testing device and can also be applied to other chemical analysis devices.

## Claims

1. A chemical analysis device having an analysis unit for a liquid sample, comprising:
a pipetter for sucking in and dispensing the liquid sample or a liquid reagent; and
a pipetter movement drive device having a support unit for detachably supporting the pipetter, a drive unit for driving the pipetter to cause a suction or dispensing operation of the liquid sample or liquid reagent, and a movement unit for moving the pipetter.

2. The chemical analysis device according to claim 1, wherein the pipetter has a needle unit for sucking in and dispensing the liquid sample or liquid reagent and is provided with a detection cell detachable from the needle unit and, after an object to be analyzed is analyzed by the analysis unit while the object to be analyzed is housed in the detection cell, the detection cell is mounted on the needle unit and while the detection cell is mounted on the needle unit, the detection cell is removed from the pipetter movement drive device together with the pipetter.

3. The chemical analysis device according to claim 2, further comprising a sample housing cell for housing the liquid sample or liquid reagent and a rotation drive device for rotating the sample housing cell.

4. A pipetting device which is used in a chemical analysis device for analyzing a liquid sample and which sucks in and dispenses the liquid sample or a liquid reagent, comprising:
a needle unit for sucking in and dispensing the liquid sample or liquid reagent;
a plunger unit for sucking in and dispensing the liquid sample or liquid reagent via the needle unit;
a syringe unit for movably supporting the plunger unit;
a flange unit detachably supported by the chemical analysis device;
a drive end detachably supported by the chemical analysis device so that the plunger unit is driven by a drive device of the chemical analysis device; and
a detection cell detachably supported by the needle unit, which cell serves as a protective cover of the needle unit and houses an object to be analyzed.

5. A genetic testing device having a testing unit for testing a gene in a liquid sample, comprising:
a pipetter having a nucleic acid capturing carrier therein and used for sucking in and dispensing the liquid sample or a liquid reagent;
a pipetter movement drive device having a support unit for detachably supporting the pipetter, a drive unit for driving the pipetter to cause a suction or dispensing operation of the liquid sample or liquid reagent, and a movement unit for moving the pipetter.

6. The genetic testing device according to claim 5, wherein the pipetter has a needle unit for sucking in and dispensing the liquid sample or liquid reagent and is provided with a detection cell detachable from the needle unit and, after an object to be tested is tested by the testing unit while the object to be tested is housed in the detection cell, the detection cell is mounted on the needle unit and while the detection cell is mounted on the needle unit, the detection cell is removed from the pipetter movement drive device together with the pipetter.

7. The genetic testing device according to claim 6, further comprising a sample housing cell for housing the liquid sample or liquid reagent and a rotation drive device for rotating the sample housing cell.

8. The genetic testing device according to claim 5, comprising a solution pipetting tip attached to and detached from the pipetter, a nucleic acid purification tip attached to and detached from the pipetter, and a detection cell that covers the nucleic acid purification tip and is detachable from the pipetter while the nucleic acid purification tip is mounted on the pipetter, wherein after an object to be tested is tested by the testing unit while the object to be tested is housed in the detection cell, the detection cell is mounted on the pipetter and while the detection cell is mounted on the pipetter, the detection cell is removed from the pipetter movement drive device together with the pipetter.

9. The genetic testing device according to claim 5, further comprising a plurality of reagent cells in an integral structure.

10. The genetic testing device according to claim 9, wherein a surface of the reagent cell is covered with a protective film for protecting a reagent therein and preventing scattering thereof, the pipetter has a needle unit, and the needle unit pierces the protective film.

11. The genetic testing device according to claim 9, wherein a part of the plurality of reagent cells are reagent waste cells having a reagent adsorbent and a mist scattering prevention filter, which have a function to have used reagents remaining in the pipetter dispensed and to capture the reagents.

12. A pipetting device for genetic testing which is used in a genetic testing device for testing a gene in a liquid sample and which sucks in and dispenses the liquid sample or a liquid reagent, comprising:
a needle unit having a nucleic acid capturing carrier therein and used for sucking in and dispensing the liquid sample or liquid reagent;
a plunger unit for sucking in and dispensing the liquid sample or liquid reagent via the needle unit;
a syringe unit for movably supporting the plunger unit;
a flange unit detachably supported by the genetic testing device;
a drive end detachably supported by the genetic testing device so that the plunger unit is driven by a drive device of the genetic testing device; and
a detection cell detachably supported by the needle unit, which cell serves as a protective cover of the needle unit and houses an object to be tested.
